# EUROPEAN PATENT APPLICATION

(11) **EP 1 743 810 A1**
(43) Date of publication of application: **17.01.2007**
(21) Application number: 06013669.4
(22) Date of filing: 30.06.2006
(51) Int. Cl.: B60R 21/18, B60R 21/233

(54) **Occupant restraint belt and occupant restraint system**

(30) Priority: 13.07.2005 JP 2005204556
(71) Applicant: TAKATA CORPORATION, Minato-ku, Tokyo 106-8510 (JP)
(72) Inventor: Suyama, Yoji, Tokyo 106-8510 (JP); Hiroshige, Atsushi, Toyota-shi Aichi 471-8571 (JP); Kato, Katsumi, Toyota-shi Aichi 471-8571 (JP); Nezaki, Takuya, Toyota-shi Aichi 471-8571 (JP)
(74) Representative: Banzer, Hans-Jörg

(57) **Abstract**

In order to further speed up the inflation of the head-side portion of an occupant restraint belt that passes by the head of an occupant and routed across the front of the occupant, and which is inflatable from the head-side portion disposed on the side of the occupant's head across the front portion disposed at the front of the occupant, a shoulder belt section (10) of an occupant restraint belt (1) has a head-side portion (10S) located on the side of the head of an occupant; and a front portion (10F) located across the front of the occupant. The shoulder belt section (10) has a structure in which, upon inflation, the head-side portion (10S) becomes thicker than the front portion (10F), and the front portion (10F) becomes substantially even in thickness in the longitudinal direction.

## Description

### [Technical Field]

The present invention relates to an inflatable occupant restraint belt for restraining an occupant sitting in a vehicle seat and an occupant restraint system equipped with the occupant restraint belt.

### [Background Art]

Known occupant restraint systems for restraining an occupant sitting in a vehicle seat with an inflatable belt include an occupant restraint system having a shoulder anchor disposed on the end of the seat adjacent to the rear of the vehicle and an occupant restraint belt passing through the shoulder anchor and routed across the front of the occupant, in which at least the part of the occupant restraint belt disposed on the side of the head of the occupant is inflatable (e.g., Japanese Unexamined Patent Application Publication No. 2003-312439).

In the occupant restraint system (airbelt apparatus) disclosed in Japanese Unexamined Patent Application Publication No. 2003-312439, the shoulder anchor is fixed to the upper part of a pillar located obliquely behind the vehicle seat, and the occupant restraint belt passing through the shoulder anchor is routed across the front of an occupant sitting in the seat.

The occupant restraint belt has a shoulder belt section that is routed obliquely from the shoulder anchor, beside the head of the occupant, laterally across the front of the upper part of the occupant, and to the part around the waist opposite to the shoulder anchor; and a lap belt section connected to the lower end of the shoulder belt section and routed across around the abdominal part of the occupant so as to cover it. The shoulder belt section of this reference is an inflatable bag-like belt. The bag-like belt is disposed such that the upper end is located on the side of the head of the occupant. The lap belt section of this reference is also an inflatable bag.

The lower end of the shoulder belt section and one end of the lap belt section connect to a tongue that is to be inserted and latched in a buckle device when the occupant fastens the belt. The buckle device has an inflator for inflating the shoulder belt section and the lap belt section. The tongue has a passage for introducing gas from the inflator into the shoulder belt section and the lap belt section.

In the event of a vehicle collision or rollover or the like, the inflator is activated to inflate the shoulder belt section and the lap belt section with the gas, thereby restraining the occupant. At that time, the part of the shoulder belt section located on the side of the occupant's head (hereinafter, sometimes referred to as a head-side portion) inflates between the occupant's head and the side of the vehicle cabin. This prevents the occupant's head from striking against the side of the vehicle cabin and the like.

It is preferable that the head-side portion of the shoulder belt section comes under high internal pressure as fast as possible.

However, as shown in Fig. 1 of the reference, the shoulder belt section of the occupant restraint system of this reference has substantially an even thickness from the head-side portion across the front of the occupant (hereinafter, sometimes referred to as a front portion) or the front portion is thicker than the head-side portion. Accordingly, it takes a long time after the start of gas supply to the shoulder belt section until the head-side portion comes under sufficiently high internal pressure.

Japanese Unexamined Patent Application Publication No.11-301396 discloses a structure in which a shoulder belt section (inflatable body) is shaped in an approximately inverted conical trapezoid so that the shoulder belt section inflates more at the waist of the occupant (front portion) than at the shoulder of the occupant (head-side portion) during inflation.

In the occupant restraint system disclosed in Japanese Unexamined Patent Application Publication No.11-301396, the amount of inflation of the front portion is smaller than that of the head-side portion. Thus, the head-side portion inflates earlier than that of the occupant restraint system of Japanese Unexamined Patent Application Publication No. 2003-312439.

### [Disclosure of the Invention]

### [Problems to be Solved by the Invention]

Accordingly, it is an object of the present invention to further speed up the inflation of the head-side portion of an occupant restraint belt that passes by the head of an occupant and routed across the front of the occupant, and which is inflatable from the head-side portion disposed on the side of the head of the occupant across the front portion disposed at the front of the occupant.

### [Means for Solving the Problems]

This object is achieved by an occupant restraint belt as defined by Claim 1. The dependent claims define preferred or advantageous embodiments of the present invention and an occupant restraint system.

According to the present invention, there is provided an occupant restraint belt passing by the head of an occupant and routed across the front of the occupant, and having an inflatable portion from the side of the occupant's head to the front of the occupant. The inflatable portion includes a head-side portion located on the side of the occupant's head; and a front portion located at the front of a region lower than the shoulder of the occupant; and when the inflatable portion inflates, the head-side portion becomes thicker than the front portion, and the front portion becomes substantially even in thickness in a longitudinal direction.

Preferably, with the inflatable portion in an inflated condition, the average diameter D₁ of the head-side portion is 1.5 to 10 times as large as the average diameter D₂ of the front portion. In this respect, in the present invention D₁ may also be more than 10 times as large as D₂.

In an embodiment, the inflatable portion is inflated when gas is supplied into the front portion, and the gas then flows from the front portion to the head-side portion; and a check valve is disposed between the front portion and the head-side portion, the check valve allowing gas flow from the front portion to the head-side portion but preventing gas flow from the head-side portion to the front portion.

Additionally, there is provided an occupant restraint system including an occupant restraint belt including an inflatable portion and an inflator for inflating the inflatable portion. The occupant restraint belt is the occupant restraint belt as explained above.

### [Advantages of the Invention]

In the case of the occupant restraint belt and the occupant restraint system according to the invention, the occupant restraint belt inflates in such a manner that the front portion is thinner than the head-side portion, and the front portion is even in thickness in the longitudinal direction. Accordingly, the front portion inflates less than the head-side portion as compared with that of a conical trapezoid shape disclosed in Japanese Unexamined Patent Application Publication No. 11-301396 in which the front portion increases in thickness toward the head-side portion. Thus, the head-side portion inflates more quickly.

As explained above, it is preferable that the average diameter D₁ of the head-side portion be 1.5 to 10 times as large as the average diameter D₂ of the front portion. The average diameter indicates the average diameter of the cross section of the inflatable portion from the front portion to the head-side portion perpendicular to the length thereof. When the cross section is substantially circular in shape, the diameter of the circle is assumed the average diameter; when the cross section is substantially elliptic or oval in shape, the average of the major diameter and the minor diameter is assumed the average diameter.

This structure sufficiently speeds up the inflation of the head-side portion while maintaining the cushioning property of the front portion.

The structure of the embodiment having the check valve prevents the backflow of gas from the head-side portion to the front portion, thus maintaining the internal pressure of the head-side portion for a long time.

### [Brief Description of the Drawings]

Embodiments of the present invention will be described with reference to the drawings, wherein:
Fig. 1 is a perspective view of an occupant restraint system including an inflatable occupant restraint belt according to an embodiment.
Fig. 2 is a front view of an inflatable portion of the occupant restraint belt.
Fig. 3 is a structural diagram of a bag serving as the inflatable portion.
Fig. 4 is an enlarged sectional view of an essential part of a check valve disposed in the bag serving as the inflatable portion.
Fig. 5 includes a structural diagram of a bag serving as an inflatable portion of an occupant restraint belt according to another embodiment, and a side view of the inflatable portion of the occupant restraint belt in an inflated state.

### [Detailed Description of Embodiments]

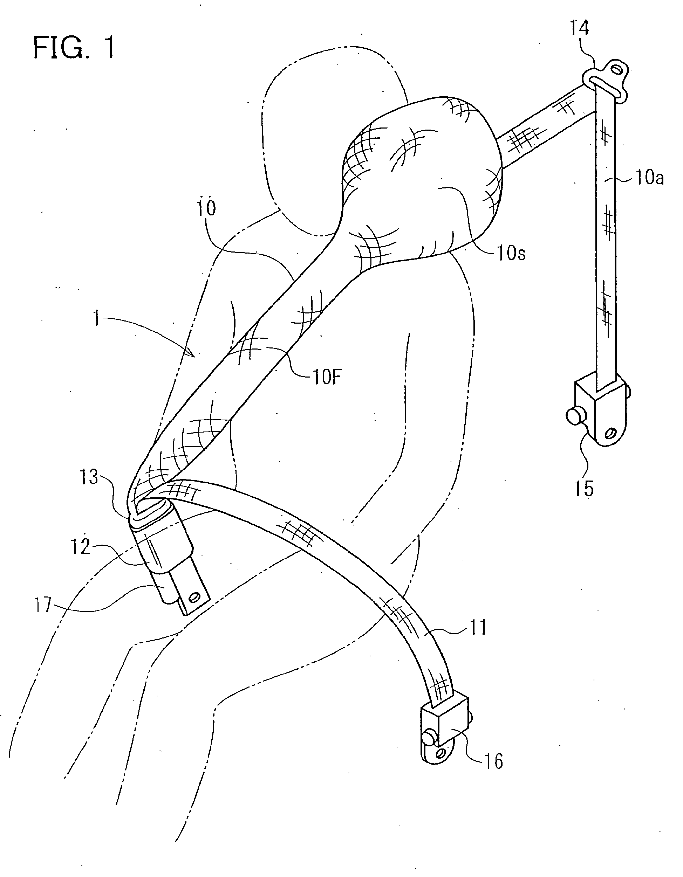

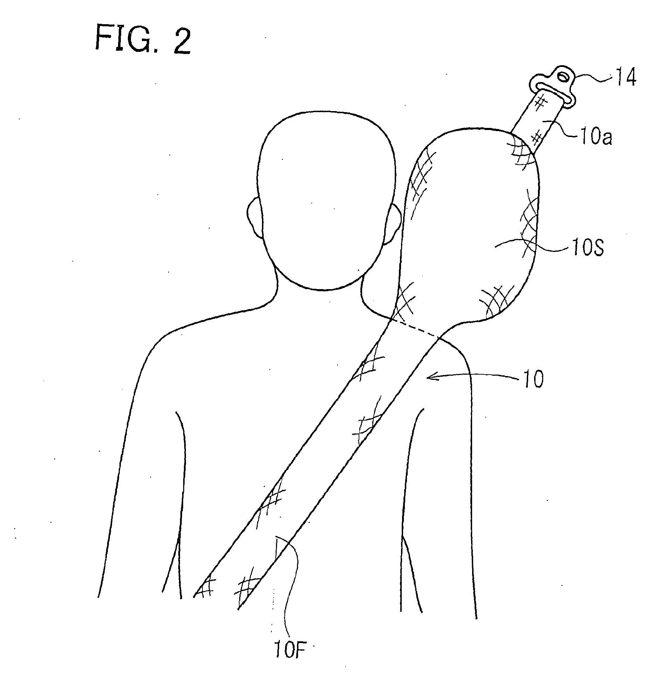

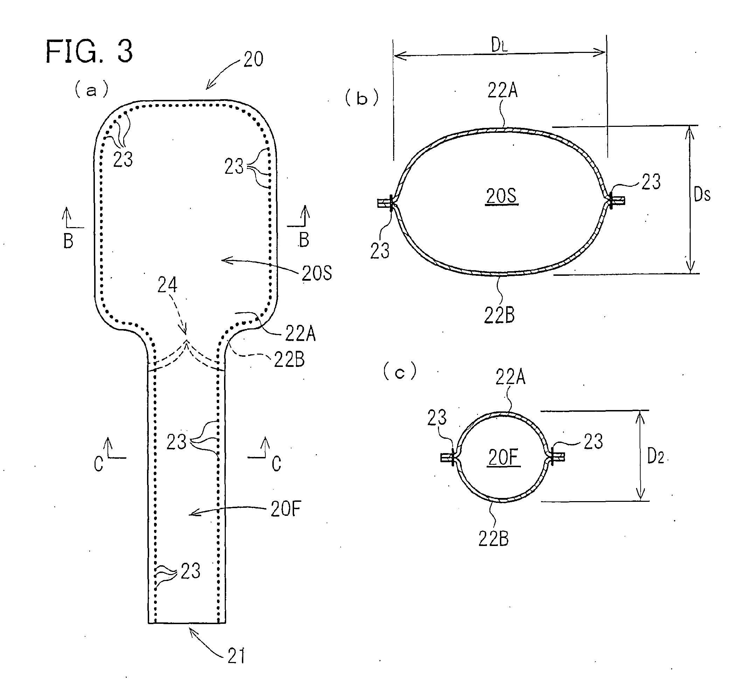

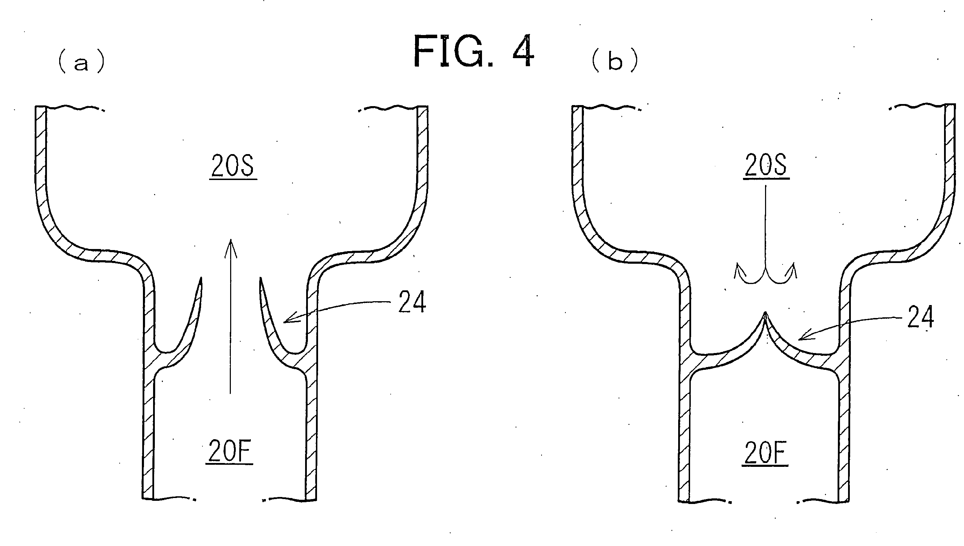

Fig. 1 is a perspective view of an occupant restraint system including an inflatable occupant restraint belt according to an embodiment. Fig. 2 is a front view of an inflatable portion of the occupant restraint belt. Figs. 1 and 2 show the inflatable portion in an inflated state. Fig. 3(a) is a plan view of a bag that serves as the inflatable portion; Figs. 3(b) and 3(c) are cross-sectional views taken along line B-B and line C-C of Fig. 3(a), respectively; Figs. 4(a) and 4(b) are schematic cross-sectional views showing the action of a check valve during the communication of gas and during checking of gas.

The occupant restraint system of the embodiment includes a shoulder belt section 10 that passes by the head of an occupant sitting in a vehicle seat and is routed obliquely (from the upper left to the lower right in this embodiment) across the front of the upper part around the occupant; a webbing 10a connecting to the shoulder belt section 10; a lap belt section 11 routed laterally across the upper part of the waist of the occupant; a buckle device 12 disposed adjacent to the side (on the right in this embodiment) of the seat; a tongue 13 that is inserted and latched in the buckle device 12 when the occupant fastens the occupant restraint belt; and a shoulder anchor 14 that guides the webbing 10a and so on.

In this embodiment, the shoulder belt section 10, the webbing 10a, and the lap belt section 11 construct an occupant restraint belt 1.

As shown in Fig. 2, the shoulder belt section 10 has a head-side portion 10S disposed on the side of the occupant's head and a front portion 10F disposed at the front from the shoulder to the waist of the occupant. The head-side portion 10S and the front portion 10F connect to each other.

As shown in Fig. 2, the shoulder belt section 10 is constructed in such a manner that the head-side portion 10S becomes thicker than the front portion 10F and the front portion 10F becomes even in thickness in the longitudinal direction in an inflated state.

In this embodiment, the shoulder belt section 10 has a structure in which a thick belt-like bag 20, shown in Fig. 3, is folded into a thin belt shape and is covered, which is normally in belt shape.

The bag 20 has a head-side-portion chamber 20S that constructs the head-side portion 10S and a front-portion chamber 20F that constructs the front portion 10F when formed into the shoulder belt section 10. In this embodiment, a gas inlet 21 is disposed at the end of the front-portion chamber 20F remote from the head-side-portion chamber 20S.

The bag 20 of this embodiment is made up of two panels 22A and 22B that construct an occupant-side surface and a surface opposite to the occupant, from the front portion 10F to the head-side portion 10S of the shoulder belt section 10 in an inflated state, respectively. As shown in Fig. 3(a), the panels 22A and 22B are each shaped like a relatively thin belt (and substantially equal-width in the longitudinal direction thereof) at the region that forms the side of the front portion 10F (front-portion chamber 20F), and are each shaped like a substantially rectangle wider than that at the region that forms the side of the head-side portion 10S (head-side-portion chamber 20S).

The panels 22A and 22B are put one on another and the peripheries of which are joined together by joining means such as a sewing thread 23 or the like to form the bag 20.

In the invention, it is preferable to construct the shoulder belt section 10 (the bag 20 in this embodiment) in such a manner that the average diameter D₁ of the head-side portion 10S (head-side-portion chamber 20S) be 1.5 to 10 times as large as the average diameter D₂ of the front portion 10F (the front-portion chamber 20F). The average diameter indicates the average diameter of the cross section of the shoulder belt section 10 (bag 20) perpendicular to the length thereof.

In this embodiment, as shown in Fig. 3(b), the head-side-portion chamber 20S becomes substantially elliptic or oval in an inflated state. The average diameter D₁ of the head-side-portion chamber 20S is the average value of its major diameter D_{L} and minor diameter D_{S}. As shown in Fig. 3(c), the front-portion chamber 20F becomes substantially circular in an inflated state. The average diameter D₂ of the front-portion chamber 20F is the diameter of the circle.

In this embodiment, a check valve 24 is disposed between the front-portion chamber 20F and the head-side-portion chamber 20S. The check valve 24 prevents the reverse flow of gas from the head-side-portion chamber 20S to the front-portion chamber 20F. As shown in Figs. 4(a) and 4(b), when gas flows from the front-portion chamber 20F to the head-side-portion chamber 20S, the check valve 24 opens to allow the gas flow into the head-side-portion chamber 20S; when gas flows from the head-side-portion chamber 20S toward the front-portion chamber 20F, the check valve 24 closes to prevent the gas flow from the front-portion chamber 20F.

The shoulder belt section 10 is formed by folding the bag 20 to a small width, retaining the shape with a band etc., and then covering it.

The end of the shoulder belt section 10 adjacent to the side of the head-side portion 10S is connected to the webbing 10a by stitching or the like; the other end (adjacent to the gas inlet 21) is connected to the tongue 13.

The webbing 10a is made of a normal belt similar to general uninflatable seatbelts, and slidably passes through the shoulder anchor 14. The end of the webbing 10a retractably connects to an emergency-lock seatbelt retractor (ELR) 15 mounted to the vehicle.

In this embodiment, the buckle device 12 connects to an inflator 17 that is activated to emit high-pressure gas in an emergency such as a car collision or the like. The tongue 13 has a passage (not shown) for introducing the gas from the inflator 17 into the shoulder belt section 10. The gas inlet 21 of the bag 20 communicates with the passage.

According to embodiment, the lap belt section 11 is also made of a normal belt similar to general uninflatable seatbelt. The end of the lap belt section 11 connects to the tongue 13; the other end retractably connects to a seatbelt retractor (ELR) 16 disposed at the end of the seat opposite to the buckle device 12.

The occupant restraint belt 1 can be used like general seatbelts. When the inflator 17 is activated at a car collision or rollover or the like, gas is introduced into the shoulder belt section 10 (bag 20) through the passage and the gas inlet 21 to inflate the shoulder belt section 10 in such a manner that it increases in thickness (diameter), as shown in Figs. 1 and 2.

At that time, the gas from the inflator 17 is first supplied into the front portion 10F (front-portion chamber 20F), and then flows from the front portion 10F into the head-side portion 10S (head-side-portion chamber 20S). In the case of the occupant restraint belt 1, the front portion 10F is thinner than the head-side portion 10S, and is substantially even in width in the longitudinal direction. The gas from the inflator 17 therefore flows into the head-side portion 10S through the front portion 10F very quickly. Thus, the head-side portion 10S comes under high internal pressure very quickly.

In this embodiment, the check valve 24 serving as checking means for preventing backflow of the gas from the head-side portion 10S to the front portion 10F is disposed between the front portion 10F and the head-side portion 10S. Thus, the internal pressure of the head-side portion 10S can be maintained high for a relatively long time.

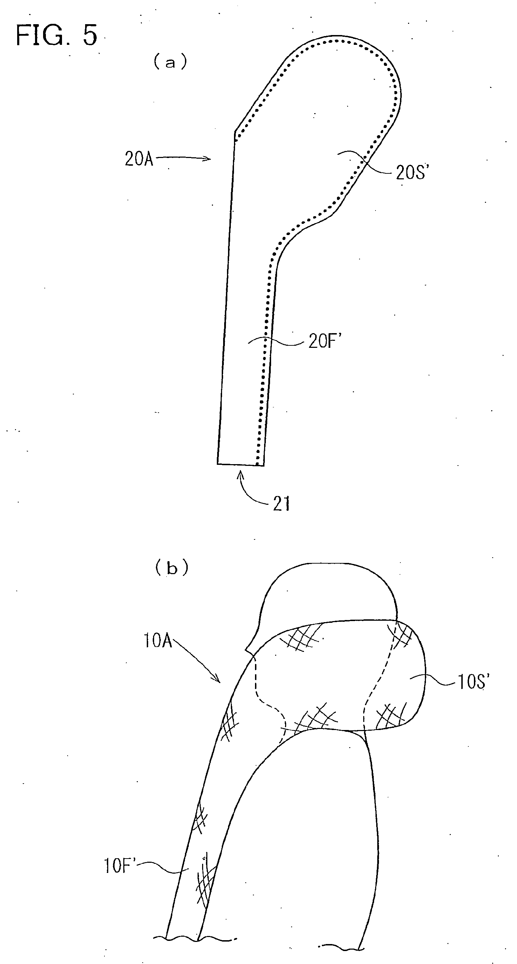

The inflatable portion (shoulder belt section) may have another shape. Fig. 5 is an explanatory diagram of another structural example of the shoulder belt section serving as an inflatable portion, wherein Fig. 5(a) is a side view of the bag of the shoulder belt section; and Fig. 5(b) is a side view of the shoulder belt section in an inflated state.

The shoulder belt section 10A of the occupant restraint belt of this embodiment also has a head-side portion 10S' disposed on the side of the head of the occupant and a front portion 10F' disposed at the front from the shoulder to the waist of the occupant. As shown in the drawing, the shoulder belt section 10A of the embodiment is constructed to inflate from the front portion 10F' to the head-side portion 10S' into a shape curved along the upper surface of the occupant's shoulder.

In this embodiment, the part from the front portion 10F' to the head-side portion 10S' facing the occupant is shorter than the opposite part. Accordingly, upon inflation, the head-side portion 10S' is drawn to the occupant, so that the shoulder belt section 10A fits the upper surface of the occupant's shoulder.

Also the shoulder belt section 10A of this embodiment is formed by folding a thick belt-like bag 20A into a thin belt shape and covering it, which is normally retained in belt shape.

Also the bag 20A has a head-side-portion chamber 20S' that constructs the head-side portion 10S' and a front-portion chamber 20F' that constructs the front portion 10'F when formed into the shoulder belt section 10A. As shown in Fig. 5(a), the bag 20A of this embodiment has the chambers 20F' and 20S' ranging in a substantially elbowed shape. Also in this embodiment, a gas inlet 21 is disposed at the end of the front-portion chamber 20F' remote from the head-side-portion chamber 20S'.

The shoulder belt section 10A is formed by folding the bag 20A to a small width such that it extends from the front-portion chamber 20F' to the head-side-portion chamber 20S', retaining the shape with a band etc., and then covering it.

The other structure of the occupant restraint belt including the shoulder belt section 10A is the same as that of the occupant restraint belt 1 shown in Figs. 1 to 4.

The occupant restraint belt equipped with this shoulder belt section 10A has a structure in which the shoulder belt section 10A inflates from the front portion 10F' to the head-side portion 10S' in a shape curved along the upper surface of the occupant's shoulder. Accordingly, the inflated shoulder belt section 10A can be fitted securely to the part from the front to the upper surface of the occupant's shoulder.

It is to be understood that the above-described embodiments are examples of the invention, and the invention is not limited to the structure in the drawings.

Although the occupant restraint belts of the embodiments have a structure in which only the shoulder belt sections 10 and 10A inflate, also the lap belt section 11 may be inflatable. The system of supplying gas to the inflatable portion, the system of retracting the belt when it is not used, and the structure to insert the belt into the tongue and the through anchor may be other than those in the drawings.

## Claims

1. An occupant restraint belt (1) passing by the head of an occupant and routed across the front of the occupant, and having an inflatable portion from the side of the occupant's head to the front of the occupant, wherein
the inflatable portion includes a head-side portion (10S; 10S') located on the side of the occupant's head; and a front portion (10F; 10F') located at the front of a region lower than the shoulder of the occupant; and with the inflatable portion in an inflated state, the head-side portion (10S; 10S') becomes thicker than the front portion (10F; 10F'), and the front portion (10F; 10F') becomes substantially even in thickness in a longitudinal direction.

2. The occupant restraint belt (1) according to Claim 1, wherein, with the inflatable portion in an inflated condition, the average diameter D₁ of the head-side portion (10S; 10S') is 1.5 to 10 times as large as the average diameter D₂ of the front portion (10F; 10F').

3. The occupant restraint belt (1) according to Claim 1 or 2, wherein the inflatable portion is inflated when gas is supplied into the front portion (10F; 10F'), and the gas then flows from the front portion (10F; 10F') to the head-side portion (10S; 10S'); and
a check valve (24) is disposed between the front portion (10F; 10F') and the head-side portion (10S; 10S'), the check valve (24) allowing gas flow from the front portion (10F; 10F') to the head-side portion (10S; 10S') but preventing gas flow from the head-side portion (10S; 10S') to the front portion.

4. An occupant restraint system comprising an occupant restraint belt (1) including an inflatable portion and an inflator for inflating the inflatable portion, wherein the occupant restraint belt (1) is the occupant restraint belt (1) according to one of Claims 1 to 3.
